# EUROPEAN PATENT APPLICATION

(11) **EP 4 773 718 A1**
(43) Date of publication of application: **08.07.2026**
(21) Application number: 26150307.2
(22) Date of filing: 06.01.2026
(51) Int. Cl.: H04W 74/0816, H04W 84/12, H04W 72/512

(54) **SYSTEM AND METHOD FOR WIRELESS CHANNEL ACCESS**

(30) Priority: 06.01.2025 US 202519010805
(71) Applicant: NXP USA, Inc., Austin, TX 78735 (US)
(72) Inventor: ZHENG, Xiayu, 5656AG Eindhoven (NL); ZHANG, Hongyuan, 5656AG Eindhoven (NL); TAMHANE, Sagar Ashok, 5656AG Eindhoven (NL); KULKARNI, Anup Ramesh, 5656AG Eindhoven (NL)
(74) Representative: Schwarzweller, Thomas

(57) **Abstract**

Embodiments of a wireless device, a wireless access point (AP), and a method for wireless communications are disclosed. In an embodiment, a wireless device includes a controller configured to map, based on station (STA) priority and latency consideration, downlink (DL) traffic of STAs to different transmit queues and to adjust Enhanced Distributed Channel Access (EDCA) parameters for the different transmit queues and a wireless transceiver configured to implement wireless channel access based on the adjusted EDCA parameters to communicate with the STAs.

## Description

### BACKGROUND

Wireless communications devices, e.g., access points (APs) or non-AP devices, can transmit various types of information using different transmission techniques. For example, various applications, such as, Internet of Things (IoT) applications can conduct wireless local area network (WLAN) communications, for example, based on Institute of Electrical and Electronics Engineers (IEEE) 802.11 family of standards (e.g., Wi-Fi standards). Some applications, for example, video teleconferencing, streaming entertainment, high definition (HD) video surveillance applications, outdoor video sharing applications, etc., demand relatively high system throughput. To facilitate proper data transmission within a wireless communications system, there is a need for wireless communications technology that can efficiently and securely convey communications signaling information, for example, information related to data, communications links, and/or multi-link devices (e.g., operation and/or capability parameters of multi-link devices) within the wireless communications system.

### SUMMARY

Embodiments of a wireless device, a wireless access point (AP), and a method for wireless communications are disclosed. In an embodiment, a wireless device includes a controller configured to map, based on station (STA) priority and latency consideration, downlink (DL) traffic of STAs to different transmit queues and to adjust Enhanced Distributed Channel Access (EDCA) parameters for the different transmit queues and a wireless transceiver configured to implement wireless channel access based on the adjusted EDCA parameters to communicate with the STAs. Other embodiments are also disclosed.

In an embodiment, the wireless device includes a wireless access point (AP).

In an embodiment, the controller is further configured to map latency sensitive DL traffic to be transmitted to a first STA of the STAs to a high priority transmit queue of the different transmit queues and map DL traffic to be transmitted to other STAs of the STAs to other transmit queues of the different transmit queues.

In an embodiment, the controller is further configured to map non-latency sensitive DL traffic to be transmitted to the first STA to the other transmit queues of the different transmit queues.

In an embodiment, the wireless transceiver is further configured to transmit Quality of Service (QoS) data in the high priority transmit queue in a bursting sequence.

In an embodiment, the bursting sequence in the high priority transmit queue is preceded with a request to send (RTS) and a clear to send (CTS) exchange to reserve a transmit opportunity (TXOP).

In an embodiment, the controller is further configured to set a duration of the TXOP to protect the QoS data in the high priority transmit queue.

In an embodiment, the controller is further configured to use a first set of EDCA parameters for the high priority transmit queue and use a second set of EDCA parameters for the other transmit queues, where the second set of EDCA parameters are less aggressive than the first set of EDCA parameters.

In an embodiment, the controller is further configured to use larger arbitration interframe spacing (AIFS) number (AIFSN) or minimum contention window (CWmin) for the second set of EDCA parameters and use smaller AIFSN or CWmin for the first set of EDCA parameters.

In an embodiment, the controller is further configured to use larger arbitration interframe spacing (AIFS) number (AIFSN) or maximum contention window (CWmax) for the second set EDCA parameters and use smaller AIFSN or CWmax for the first set of EDCA parameters.

In an embodiment, the controller is further configured to set the second set of EDCA parameters for the other transmit queues to be less aggressive than a setting for an Access Category (AC) advertised for the first STA's uplink (UL) traffic.

In an embodiment, the wireless device includes a wireless multi-link device (MLD).

In an embodiment, the wireless device is compatible with an Institute of Electrical and Electronics Engineers (IEEE) 802.11 protocol.

In an embodiment, a wireless access point (AP) compatible with an Institute of Electrical and Electronics Engineers (IEEE) 802.11 protocol includes a controller configured to map, based on station (STA) priority and latency consideration, downlink (DL) traffic of STAs to different transmit queues and to adjust Enhanced Distributed Channel Access (EDCA) parameters for the different transmit queues and a wireless transceiver configured to implement wireless channel access based on the adjusted EDCA parameters to communicate with the STAs.

In an embodiment, the controller is further configured to map latency sensitive DL traffic to be transmitted to a first STA of the STAs to a high priority transmit queue of the different transmit queues and map DL traffic to be transmitted to other STAs of the STAs to other transmit queues of the different transmit queues.

In an embodiment, the wireless transceiver is further configured to transmit the DL traffic in the high priority transmit queue in a bursting sequence.

In an embodiment, the controller is further configured to use a first set of EDCA parameters for the high priority transmit queue and use a second set of EDCA parameters for the other transmit queues, where the second set of EDCA parameters are less aggressive than the first set of EDCA parameters.

In an embodiment, the controller is further configured to use larger arbitration interframe spacing (AIFS) number (AIFSN) or minimum contention window (CWmin) for the second set of EDCA parameters and use smaller AIFSN or CWmin for the first set of EDCA parameters.

In an embodiment, a method for wireless communications involves at a wireless access point (AP), mapping, based on station (STA) priority and latency consideration, downlink (DL) traffic of STAs to different transmit queues, and at the wireless AP, adjusting Enhanced Distributed Channel Access (EDCA) parameters for the different transmit queues.

In an embodiment, the method further includes at the wireless AP, implementing wireless channel access based on the adjusted EDCA parameters to communicate with the STAs

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts a wireless communications system in accordance with an embodiment of the invention.
Fig. 2 depicts a multi-link (ML) communications system that is used for wireless communications in accordance with an embodiment of the invention.
Fig. 3 depicts a wireless device in accordance with an embodiment of the invention.
Fig. 4 illustrates example communications between an AP and three stations (STAs).
Fig. 5 depicts a channel access manager in accordance with an embodiment of the invention.
Fig. 6 illustrates some communications between an AP and three STAs in accordance with an embodiment of the invention.
Fig. 7 illustrates some communications between an AP and three STAs in which DL traffic can be sent in bursting sequences in accordance with an embodiment of the invention.
Fig. 8 illustrates some communications between an AP and three STAs in which DL traffic can be sent in bursting sequences preceded with request to send (RTS)/clear to send (CTS) packet exchanges in accordance with an embodiment of the invention.
Fig. 9 is a process flow diagram of a method for wireless communications in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

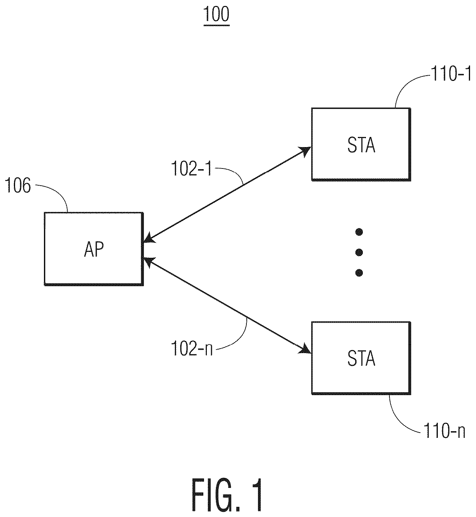

Fig. 1 depicts a wireless (e.g., WiFi) communications system 100 in accordance with an embodiment of the invention. In the embodiment depicted in Fig. 1, the wireless communications system 100 includes at least one AP 106 and at least one station (STA) 110-1, ..., 110-n, where n is a positive integer. The wireless communications system can be used in various applications, such as industrial applications, medical applications, computer applications, and/or consumer or enterprise applications. In some embodiments, the wireless communications system is compatible with an IEEE 802.11 protocol. Although the depicted wireless communications system 100 is shown in Fig. 1 with certain components and described with certain functionality herein, other embodiments of the wireless communications system may include fewer or more components to implement the same, less, or more functionality. For example, in some embodiments, the wireless communications system includes multiple APs with multiple STAs, one AP with one STA, or one AP with multiple STAs. In another example, although the wireless communications system is shown in Fig. 1 as being connected in a certain topology, the network topology of the wireless communications system is not limited to the topology shown in Fig. 1. In some embodiments, the wireless communications system 100 described with reference to Fig. 1 involves single-link communications and the AP and the STA communicate through single communications link. In some embodiments, the AP 106 may be affiliated with an AP MLD, and a STA 100-j with j being an integer equal to one of 1 to n with n being an integer may be affiliated with a STA MLD j (= non-AP MLD j).

In the embodiment depicted in Fig. 1, the AP 106 may be implemented in hardware (e.g., circuits), software, firmware, or a combination thereof. The AP 106 may be fully or partially implemented as an integrated circuit (IC) device. In some embodiments, the AP 106 is a wireless AP compatible with at least one WLAN communications protocol (e.g., at least one IEEE 802.11 protocol). In some embodiments, the AP is a wireless AP that connects to a local area network (LAN) and/or to a backbone network (e.g., the Internet) through a wired connection and that wirelessly connects to one or more wireless stations (STAs), for example, through one or more WLAN communications protocols, such as the IEEE 802.11 protocol. In some embodiments, the AP includes at least one antenna, at least one transceiver operably connected to the at least one antenna, and at least one controller operably connected to the corresponding transceiver. In some embodiments, the transceiver includes a physical layer (PHY) device. The controller may be configured to control the transceiver to process received packets through the antenna. In some embodiments, the controller is implemented within a processor, such as a microcontroller, a host processor, a host, a digital signal processor (DSP), or a central processing unit (CPU), which can be integrated in a corresponding transceiver. In some embodiments, the AP 106 (e.g., a controller or a transceiver of the AP) implements upper layer Media Access Control (MAC) functionalities (e.g., association establishment, reordering of frames, etc.) and/or lower layer MAC functionalities (e.g., backoff, frame transmission, frame reception, etc.). Although the wireless communications system 100 is shown in Fig. 1 as including one AP, other embodiments of the wireless communications system 100 may include multiple APs. In these embodiments, each of the APs of the wireless communications system 100 may operate in a different frequency band. For example, one AP may operate in a 2.4 gigahertz (GHz) frequency band and another AP may operate in a 5 GHz frequency band.

In the embodiment depicted in Fig. 1, each of the at least one STA 110-1, ..., 110-n may be implemented in hardware (e.g., circuits), software, firmware, or a combination thereof. The STA 110-1, ..., or 110-n may be fully or partially implemented as IC devices. In some embodiments, the STA 110-1, ..., or 110-n is a communication device compatible with at least one IEEE 802.11 protocol. In some embodiments, the STA 110-1, ..., or 110-n is implemented in a laptop, a desktop personal computer (PC), a mobile phone, or other communications device that supports at least one WLAN communications protocol. In some embodiments, the STA 110-1, ..., or 110-n implements a common MAC data service interface and a lower layer MAC data service interface. In some embodiments, the STA 110-1, ..., or 110-n includes at least one antenna, at least one transceiver operably connected to the at least one antenna, and at least one controller connected to the corresponding transceiver. In some embodiments, the transceiver includes a PHY device. The controller may be configured to control the transceiver to process received packets through the antenna. In some embodiments, the controller is implemented within a processor, such as a microcontroller, a host processor, a host, a DSP, or a CPU, which can be integrated in a corresponding transceiver.

In the embodiment depicted in Fig. 1, the AP 106 communicates with the at least one STA 110-1, ..., 110-n via a communication link 102-1, ..., 102-n, where n is a positive integer. In some embodiments, data communicated between the AP and the at least one STA 110-1, ..., 110-n includes MAC protocol data units (MPDUs). An MPDU may include a frame header, a frame body, and a trailer with the MPDU payload encapsulated in the frame body.

In some embodiments of a wireless communications system, a wireless device, e.g., an access point (AP) multi-link device (MLD) of a wireless local area network (WLAN) may transmit data to at least one associated station (STA) MLD. The AP MLD may be configured to operate with associated STA MLDs according to a communication protocol. For example, the communication protocol may be an Ultra High Reliability (UHR) communication protocol, or Institute of Electrical and Electronics Engineers (IEEE) 802.11bn communication protocol. In some embodiments of the wireless communications system described herein, different associated STAs within range of an AP operating according to the UHR communication protocol are configured to operate according to at least one other communication protocol, which defines operation in a Basic Service Set (BSS) with the AP, but are generally affiliated with lower reliable protocols. The lower reliable communication protocols (e.g., Extremely High Throughput (EHT) communication protocol that is compatible with IEEE 802.11be standards, High Efficiency (HE) communication protocol that is compatible with IEEE 802.11ax standards, Very High Throughput (VHT) communication protocol that is compatible with IEEE 802.11ac standards, etc.) may be collectively referred to herein as "legacy" communication protocols.

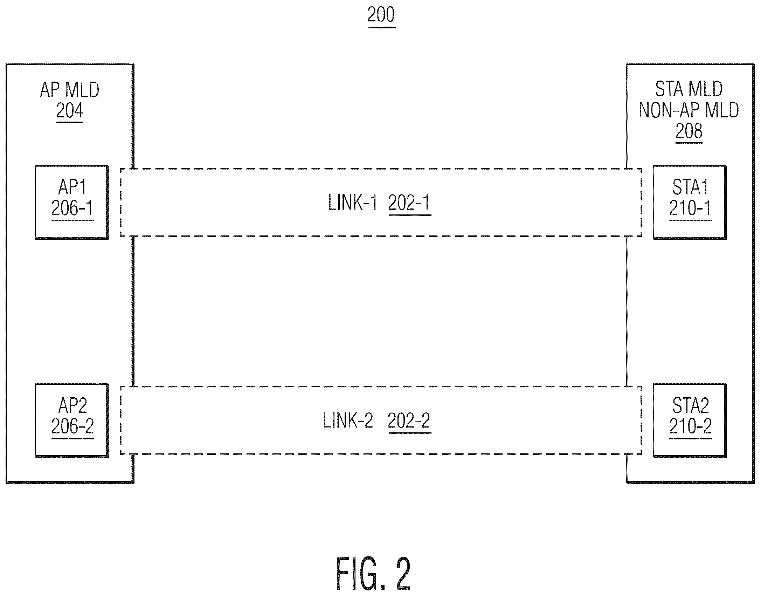

Fig. 2 depicts a multi-link (ML) communications system 200 that is used for wireless (e.g., WiFi) communications in accordance with an embodiment of the invention. In the embodiment depicted in Fig. 2, the multi-link communications system includes one AP multi-link device, which is implemented as AP MLD 204, and one non-AP STA multi-link device, which is implemented as STA MLD (non-AP MLD) 208. The multi-link communications system can be used in various applications, such as industrial applications, medical applications, computer applications, and/or consumer or enterprise applications. In some embodiments, the multi-link communications system may be a wireless communications system, such as a wireless communications system compatible with an IEEE 802.11 protocol. For example, the multi-link communications system may be a wireless communications system compatible with an IEEE 802.11bn protocol. Although the depicted multi-link communications system 200 is shown in Fig. 2 with certain components and described with certain functionality herein, other embodiments of the multi-link communications system may include fewer or more components to implement the same, less, or more functionality. For example, in some embodiments, the multi-link communications system includes a single AP MLD with multiple STA MLDs, or multiple AP MLDs with more than one STA MLD. In some embodiments, the legacy STAs (non-UHR STAs) may associate with one of the APs affiliated with the AP MLD. In another example, although the multi-link communications system is shown in Fig. 2 as being connected in a certain topology, the network topology of the multi-link communications system is not limited to the topology shown in Fig. 2.

In the embodiment depicted in Fig. 2, the AP MLD 204 includes two APs in two links, implemented as APs 206-1 and 206-2. In such an embodiment, the APs may be AP1 206-1 and AP2 206-2. In some embodiments, a common part of the AP MLD 204 implements upper layer Media Access Control (MAC) functionalities (e.g., association establishment, reordering of frames, etc.) and a link specific part of the AP MLD 204, i.e., the APs 206-1 and 206-2, implement lower layer MAC functionalities (e.g., backoff, frame transmission, frame reception, etc.). The APs 206-1 and 206-2 may be implemented in hardware (e.g., circuits), software, firmware, or a combination thereof. The APs 206-1 and 206-2 may be fully or partially implemented as an integrated circuit (IC) device. In some embodiments, the APs 206-1 and 206-2 may be wireless APs compatible with at least one WLAN communications protocol (e.g., at least one IEEE 802.11 protocol). For example, the APs 206-1 and 206-2 may be wireless APs compatible with an IEEE 802.11bn protocol. In some embodiments, an AP MLD (e.g., AP MLD 204) connects to a local network (e.g., a LAN) and/or to a backbone network (e.g., the Internet) through a wired connection and wirelessly connects to wireless STAs, for example, through one or more WLAN communications protocols, such as an IEEE 802.11 protocol. In some embodiments, an AP (e.g., AP1 206-1 and/or AP2 106-2) includes at least one antenna, at least one transceiver operably connected to the at least one antenna, and at least one controller operably connected to the corresponding transceiver. In some embodiments, at least one transceiver includes a physical layer (PHY) device. The at least one controller may be configured to control the at least one transceiver to process received packets through the at least one antenna. In some embodiments, the at least one controller may be implemented within a processor, such as a microcontroller, a host processor, a host, a digital signal processor (DSP), or a central processing unit (CPU), which can be integrated in a corresponding transceiver. In some embodiments, each of the APs 206-1 or 206-2 of the AP MLD 204 may operate in a different BSS operating channel. For example, AP1 206-1 may operate in a 320 MHz (one million hertz) BSS operating channel at 6 Gigahertz (GHz) band and AP2 206-2 may operate in a 160 MHz BSS operating channel at 5 GHz band. Although the AP MLD 204 is shown in Fig. 2 as including two APs, other embodiments of the AP MLD 204 may include more than two APs or only one AP.

In the embodiment depicted in Fig. 2, the non-AP STA multi-link device, implemented as STA MLD 208, includes STAs non-AP STAs 210-1 and 210-2 on two links. In such an embodiment, the non-AP STAs may be STA1 210-1 and STA2 210-2. The STAs 210-1 and 210-2 may be implemented in hardware (e.g., circuits), software, firmware, or a combination thereof. The STAs 210-1 and 210-2 may be fully or partially implemented as an IC device. In some embodiments, the non-AP STAs 210-1 and 210-2 are part of the STA MLD 208, such that the STA MLD may be a communications device that wirelessly connects to a wireless AP MLD. For example, the STA MLD 208 may be implemented in a laptop, a desktop personal computer (PC), a mobile phone, or other communications device that supports at least one WLAN communications protocol. In some embodiments, the non-AP STA MLD 208 is a communications device compatible with at least one IEEE 802.11 protocol (e.g., an IEEE 802.11 bn protocol, an 802.11be protocol, an IEEE 802.11ax protocol, or an IEEE 802.11ac protocol). In some embodiments, the STA MLD 208 implements a common MAC data service interface and the non-AP STAs 210-1 and 210-2 implement a lower layer MAC data service interface.

In some embodiments, the AP MLD 204 and/or the STA MLD 208 may identify which communication links support multi-link operation during a multi-link operation setup phase and/or exchanges information regarding multi-link capabilities during the multi-link operation setup phase. In some embodiments, each of the non-AP STAs 210-1 and 210-2 of the STA MLD 208 may operate in a different frequency band. For example, the non-AP STA 210-1 may operate in the 2.4 GHz frequency band and the non-AP STA 210-2 may operate in the 5 GHz frequency band. In some embodiments, each STA includes at least one antenna, at least one transceiver operably connected to the at least one antenna, and at least one controller connected to the corresponding transceiver. In some embodiments, at least one transceiver includes a PHY device. The at least one controller may be configured to control the at least one transceiver to process received packets through the at least one antenna. In some embodiments, the at least one controller may be implemented within a processor, such as a microcontroller, a host processor, a host, a DSP, or a CPU, which can be integrated in a corresponding transceiver.

In the embodiment depicted in Fig. 2, the STA MLD 208 communicates with the AP MLD 204 via two communication links, e.g., link 1 202-1 and link 2 202-2. For example, each of the non-AP STAs 210-1 or 210-2 communicates with an AP 206-1 or 206-2 via corresponding communication links 202-1 or 202-2. In an embodiment, a communication link (e.g., link 1 202-1 or link 2 202-2) may include a BSS operating channel established by an AP (e.g., AP1 206-1 or AP2 206-2) that features multiple 20 MHz channels used to transmit frames (e.g., beacon frames, management frames other than Beacon, Data frames, control frames etc. in Physical Layer Protocol Data Units (PPDUs)) between a first wireless device (e.g., an AP, an AP MLD, an STA, or an STA MLD) and a second wireless device (e.g., an AP, an AP MLD, an STA, or an STA MLD). In some embodiments, a 20 MHz channel covered by the BSS operating channel may be a punctured 20 MHz channel or an unpunctured 20 MHz channel. Although the STA MLD 208 is shown in Fig. 2 as including two non-AP STAs, other embodiments of the STA MLD 208 may include one non-AP STA or more than two non-AP STAs. In addition, although the AP MLD 204 communicates (e.g., wirelessly communicates) with the STA MLD 208 via the communications links 202-1 and 202-2, in other embodiments, the AP MLD 204 may communicate (e.g., wirelessly communicate) with the STA MLD 208 via more than two communication links or less than two communication links.

In some embodiments, a first MLD, e.g., an AP MLD or non-AP MLD (STA MLD), may transmit MLD-level management frames in a multi-link operation with a second MLD, e.g., STA MLD or AP MLD, to coordinate the multi-link operation between the first MLD and the second MLD. As an example, a management frame may be a channel switch announcement frame, a (Re)Association Request frame, a (Re)Association Response frame, a Disassociation frame, an Authentication frame, and/or a Block Acknowledgement (Ack) (BA) Action frame, etc. In some embodiments, an AP/STA of a first MLD may transmit link-level management frames to a STA/AP of a second MLD. In some embodiments, one or more link-level management frames may be transmitted via a cross-link transmission (e.g., according to an IEEE 802.11bn communication protocol). As an example, a cross-link management frame transmission may involve a management frame being transmitted and/or received on one link (e.g., link 1 202-1) while carrying information of another link (e.g., link 2 202-2). In some embodiments, a management frame is transmitted on any link (e.g., at least one of two links or at least one of multiple links) between a first MLD (e.g., AP MLD 204) and a second MLD (e.g., STA MLD 208). As an example, a management frame may be transmitted between a first MLD and a second MLD on any link (e.g., at least one of two links or at least one of multiple links) associated with the first MLD and the second MLD.

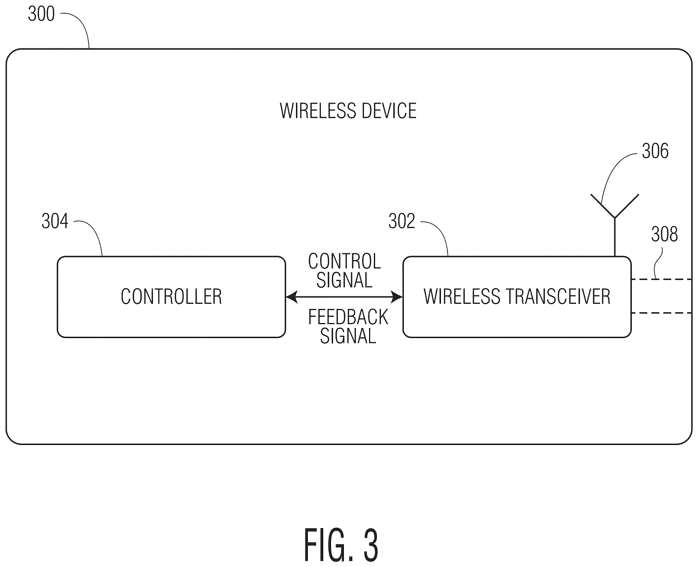

Fig. 3 depicts a wireless device 300 in accordance with an embodiment of the invention. The wireless device 300 can be used in the wireless communications system 100 depicted in Fig. 1 and/or the multi-link communications system 200 depicted in Fig. 2 for each link independently. For example, the wireless device 300 may be an embodiment of the AP 106 depicted in Fig. 1, the STA 110-1, ..., 110-n depicted in Fig. 1, the APs 206-1, 206-2 depicted in Fig. 2, and/or the STAs 210-1, 210-2 depicted in Fig. 2. In the embodiment depicted in Fig. 3, the wireless device 300 includes a wireless transceiver 302, a controller 304 operably connected to the wireless transceiver, and at least one antenna 306 operably connected to the wireless transceiver. In some embodiments, the wireless device 300 may include at least one optional network port 308 operably connected to the wireless transceiver. In some embodiments, the wireless transceiver includes a physical layer (PHY) device. The wireless transceiver may be any suitable type of wireless transceiver. For example, the wireless transceiver may be a LAN transceiver (e.g., a transceiver compatible with an IEEE 802.11 protocol). In some embodiments, the wireless device 300 includes multiple transceivers. The controller may be configured to control the wireless transceiver (e.g., by generating a control signal) to process packets received through the antenna and/or the network port and/or to generate outgoing packets to be transmitted through the antenna and/or the network port. In some embodiments, the wireless transceiver transmits one or more feedback signals to the controller. In some embodiments, the controller is implemented within a processor, such as a microcontroller, a host processor, a host, a DSP, or a CPU. In some embodiments, the wireless transceiver 302 is implemented in hardware (e.g., circuits), software, firmware, or a combination thereof. The antenna may be any suitable type of antenna. For example, the antenna may be an induction type antenna such as a loop antenna or any other suitable type of induction type antenna. However, the antenna is not limited to an induction type antenna. The network port may be any suitable type of port.

In accordance with an embodiment of the invention, the controller 304 is configured to map, based on station (STA) priority and latency consideration, downlink (DL) traffic of STAs to different transmit queues and to adjust Enhanced Distributed Channel Access (EDCA) parameters for the different transmit queues, and the wireless transceiver 302 is configured to implement wireless channel access based on the adjusted EDCA parameters to communicate with the STAs. In some embodiments, the wireless device 300 includes a wireless access point (AP). In some embodiments, the controller 304 is further configured to map latency sensitive DL traffic to be transmitted to a first STA of the STAs to a high priority transmit queue of the different transmit queues and map DL traffic to be transmitted to other STAs of the STAs to other transmit queues of the different transmit queues. In some embodiments, the controller 304 is further configured to map non-latency sensitive DL traffic to be transmitted to the first STA to the other transmit queues of the different transmit queues. In some embodiments, the wireless transceiver 302 is further configured to transmit Quality of Service (QoS) data in the high priority transmit queue in a bursting sequence. In some embodiments, the bursting sequence in the high priority transmit queue is preceded with a request to send (RTS) and a clear to send (CTS) exchange or a multi-user RTS (MU-RTS) and a CTS exchange to reserve a transmit opportunity (TXOP). In some embodiments, the controller 304 is further configured to set a duration of the TXOP to protect the QoS data in the high priority transmit queue. In some embodiments, the controller 304 is further configured to use a first set of EDCA parameters for the high priority transmit queue and use a second set of EDCA parameters for the other transmit queues, where the second set of EDCA parameters are less aggressive than the first set of EDCA parameters. In some embodiments, the controller 304 is further configured to use larger arbitration interframe spacing (AIFS) number (AIFSN) or minimum contention window (CWmin) for the second set of EDCA parameters and use smaller AIFSN or CWmin for the first set of EDCA parameters. In some embodiments, the controller 304 is further configured to use larger AIFSN or maximum contention window (CWmax) for the second set EDCA parameters and use smaller AIFSN or CWmax for the first set of EDCA parameters. In some embodiments, the controller is further configured to set the second set of EDCA parameters for the other transmit queues to be less aggressive than a setting for an Access Category (AC) advertised for the first STA's uplink (UL) traffic. In some embodiments, the wireless device 300 is compatible with an Institute of Electrical and Electronics Engineers (IEEE) 802.11 protocol. In some embodiments, the wireless device 300 includes a wireless multi-link device (MLD).

In a WLAN basic service set (BSS), an AP may be connected to multiple STAs with different QoS data service. Some QoS data may require higher priority than others for the channel (medium) access and data transfer. The enhanced distributed channel access (EDCA) mechanism defines a QoS specific mechanism for the contention-based data transfer, where four independent enhanced distributed channel access functions (EDCAFs) are used to provide differentiated priorities to transmitted traffic, through the use of four different access categories (ACs). The QoS data channel access is controlled by the EDCAF[AC] corresponding to its transmit queue with the mapped AC, and determined by the arbitration interframe spacing (AIFS) duration and backoff procedure. AIFS is the minimum idle duration determined by the AIFSN[AC] per AC*, AIFS[AC] = AIFSN[AC] × aSlotTime + aSIFSTime. Each EDCAF[AC] per AC shall maintain a backoff counter which has a value measured in backoff slot. The initial backoff counter (when the backoff procedure is invoked) is set to an integer value chosen randomly with a uniform distribution taking values in the range 0 to CW[AC] (contention window size) and will decrement during the backoff procedure. The QoS data in the transmit queue will be allowed to transmit when the backoff counter value is equal to zero and the medium is idle. The CW[AC] is initialized to CWmin[AC] (minimum size of CW) and increased for the retransmission data (e.g., due to collision) till CWmax[AC] (maximum size of CW) is reached. The main EDCA parameters to control the channel access are AIFSN[AC], CWmin[AC] and CWmax[AC] for each AC. For some specific applications, one non-AP STA may have higher priority than other STAs even though their data traffic may be categorized as the same AC since the common User Priority (UP) to AC mapping may not distinguish the priority between STAs. Keeping the same EDCA parameters for these STAs can cause throughput and/or latency degradation due to the limited channel access for the high priority STA.

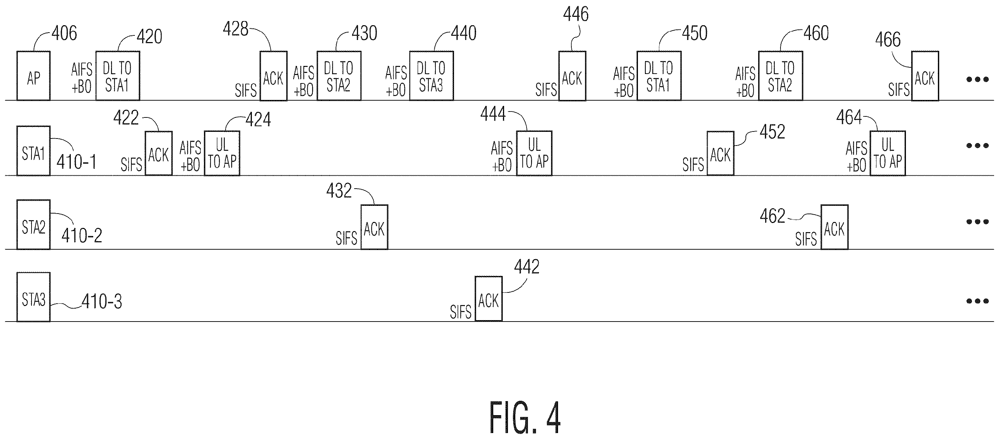

Fig. 4 illustrates example communications between an AP 406 and three stations (STAs) 410-1, 410-2, 410-3. The station 410-1, which is also referred to as STA1, is the high priority STA and has both UL and DL traffic. The stations 410-2, 410-3, which are also referred to as STA2 and STA3, respectively, have DL traffic only, but the AC of data traffic is the same for all or part of STA1's UL and DL traffic. As illustrated in Fig. 4, in a time sequence, the AP 406 transmits DL traffic 420 to STA1, STA1 transmits an ACK 422 and UL traffic 424 to the AP 406, the AP 406 transmits an ACK 428 and DL traffic 430 to STA2, STA2 transmits an ACK 432 to the AP 406, the AP 406 transmits DL traffic 440 to STA3, STA3 transmits an ACK 442 to the AP 406, STA1 transmits UL traffic 444 to the AP 406, the AP 406 transmits an ACK 446 and DL traffic 450 to STA1, STA1 transmits an ACK 452 to the AP 406, the AP 406 transmits DL traffic 460 to STA2, STA2 transmits an ACK 462 to the AP 406, STA2 transmits UL traffic 464 to the AP 406, and the AP 406 transmits an ACK 466 to STA2. At least one of the ACKs can be a single ACK or a block ACK packet depends on the aggregation status. Each new packet transmission precedes with AIFS + backoff time (BO), where the BO counter will decrement when medium is idle and reset (BO procedure invoke) after packet transmission. However, STA1 does not have the priority to transmit for UL traffic and the DL traffic to STA1 does not have priority to transmit especially if it contains latency sensitive traffic.

In WLAN standards up to IEEE 802.11ax, the AP advertises or could change the EDCA parameters in the EDCA parameter set element in the beacon frame, Probe response frame and (re)association response frame for the non-AP STAs in the same BSS to use. However, the AP should change them only rarely in these frames. In IEEE 802.11be Standard, it defines a new mechanism called emergency preparedness communications service (EPCS) for the priority STA to access the channel easily with an updated aggressive EDCA parameter negotiated between the AP/MLD and non-AP STA/MLD instead of the one from EDCA parameter set element from beacon/probe response/(re)association frames during the EPCS priority access enabled period.

An AP may use a different set of EDCA parameters as it advertises to the STAs in its BSS and no packet exchange is needed to inform the STAs. In an embodiment in accordance with the invention, EDCA parameters are adjusted at the AP side to address the traffic priority problem as in Fig. 4, which are applicable to most STAs regardless a STA supports IEEE 802.11be or not.

In some embodiments, EDCA parameters for the transmit queues are adjusted at an AP based on the STA priority and latency consideration instead of AC only. In some embodiments, for a high priority STA, an AP identifies the latency sensitive DL traffic and uses more aggressive EDCA parameters and/or Traffic identifier (TID) for the corresponding transmit queue. This transmit queue may be a special queue with one or multiple different TIDs for the STA. If there are other non-latency sensitive DL traffic, it could be assigned to other transmit queues with less aggressive EDCA parameters to reduce the internal queuing time for latency sensitive DL traffic in the same transmit queue. In some embodiments, for other STAs or non-latency sensitive traffic, an AP uses less aggressive EDCA parameters for the corresponding transmit queues. The EDCA parameters between these STAs may be the same or different based on their priorities, but they would be less aggressive than the setting for the AC advertised for the high priority STA UL traffic in EDCA parameter set element. For these STAs, the corresponding TIDs may or may not be modified depends on the applications.

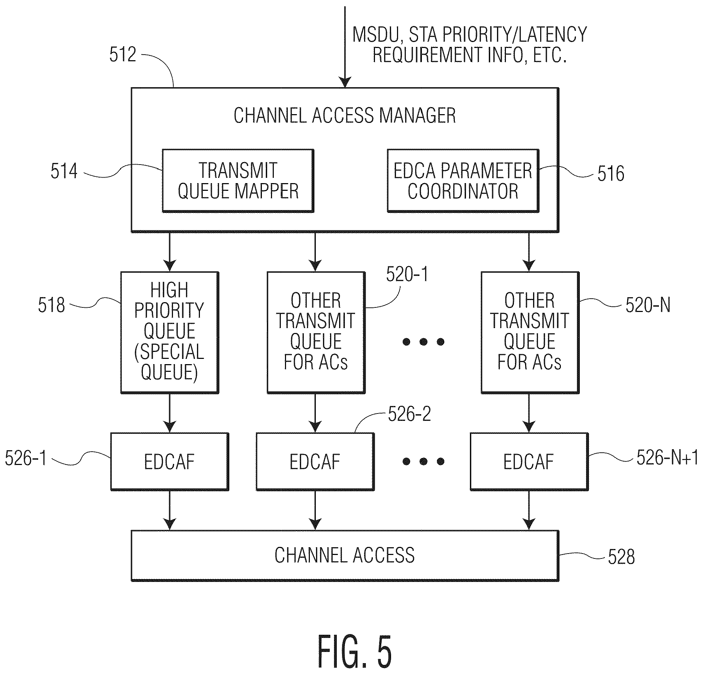

Fig. 5 depicts a channel access manager 512 in accordance with an embodiment of the invention. The channel access manager 512 can be implemented within or using the controller 304 of the wireless device 300 depicted in Fig. 3. In the embodiment depicted in Fig. 5, the channel access manager 512 includes a traffic queue mapper 514 and an EDCA parameter coordinator 516. The channel access manager 512 may be implemented in hardware (e.g., circuits), software, firmware, or a combination thereof. In some embodiments, the channel access manager 512 is implemented within a processor, such as a microcontroller, a host processor, a host, a DSP, or a CPU. In some embodiments, STA priority and latency requirement may be a priori known information with the application, or identified by other external modules.

In the embodiment depicted in Fig. 5, the transmit queue mapper 514 is configured to map traffic to either a high priority queue 518 for priority STA's latency sensitive traffic or to other transmit queues 520-1, ... , 520-N with ACs, where N is a positive integer. In some embodiments, the transmit queue mapper 514 still uses the existing "UP to AC mapping" for all the STAs' TIDs. The TID of latency sensitive traffic of the priority STA may be changed to high priority TID if it's allowed and the existing "UP to AC mapping" does not perform the above action. However, it is not required.

In the embodiment depicted in Fig. 5, the EDCA parameter coordinator 516 is configured to adjust the EDCA parameters for the transmit queues 518, 520-1, ... , 520-N based on STA's priority and latency requirement information. In some embodiments, for the high priority queue 518 (special Queue), aggressive EDCA parameters are used in EDCA function (EDCAF) 526-1 for priority STA's latency sensitive traffic. For other transmit queues 520-1, ... , 520-N for ACs, regular transmit queues for other lower priority STAs or non-latency sensitive traffic of the priority STA based on AC/TID, the EDCA parameters in EDCAF 526-2, ... , EDCAF 526-N+1 may be adjusted by the EDCA parameter coordinator 516. In some embodiments, at least one of the EDCAF 526-1, ... , EDCAF 526-N+1 is or implements a logical function (e.g., in a quality-of-service (QoS) station (STA)), which determines, using enhanced distributed channel access (EDCA), when a frame in the corresponding transmit queue with the associated access category (AC) is permitted to be transmitted via the wireless medium (WM). In some embodiments, there is one EDCAF per AC/traffic queue.

In some embodiments, the aggressiveness of the EDCA parameters in EDCAF 526-1, ... , EDCAF 526-N+1 are adjusted by setting different AIFSN and/or CWmin and/or CWmax. For example, larger AIFSN means less aggressive due to the resulting longer AIFS. In another example, larger CWmin/CWmax means less aggressive due to the resulting longer average backoff slot number. When the EDCA parameters are adjusted, either AIFSN or CWmin/CWmax, or all of them can be adjusted. For example, compared to the EDCA parameter of the AC advertised for the high priority STA, the EDCA parameter coordinator 516 can adjust either AIFSN to be less aggressive while keeping the CWmin/CWmax the same as that of the high priority STA, or verse visa, or all of them to be less aggressive.

Using the channel access manager 512, the high priority STA gets more chance to access the channel 528, which helps to improve the UL throughput especially for the UL traffic heavy applications. Both the latency sensitive DL and UL traffic of the high priority STA have more chance to access the channel 528, which helps to improve the latency. The bursting sequence for the high priority transmit queue (or special queue) helps to reduce the channel access AIFS+BO overhead. It reduces the collision between the UL traffic of the high priority STA and the DL traffic of other STAs due to the adjusted less aggressive EDCA parameters of the latter. And potentially, more MPDUs can be aggregated for the DL traffic of the other STAs due to the longer time in the transmit queue such that it increases the airtime efficiency of these STAs.

The channel access manager 512 can be used for applications without further standard level change and compatible for most STAs, especially for lower cost AP (or "mobile AP", or "micro-AP") case where only few STAs are connected and easy to identify a high priority STA use case. The high priority STA usually has UL traffic and/or DL traffic: if without DL traffic, all the transmit queues could be adjusted as lower priority queues to favor the priority STA UL traffic.

The channel access manager 512 can be applicable to other scenarios below as well. If more priority STAs are identified with DL and UL traffic, similar schemes can be used for the priority STAs to access the channel more easily. Similarly, the latency sensitive DL traffic can be queued in high priority queue (special queue). The channel access manager 512 does not limit the DL traffic of the lower priority STAs to share the TXOP with DL multi-user (MU)-Multiple-Input Multiple-Output (MIMO) or DL- Orthogonal Frequency-Division Multiple Access (OFDMA) transmission, but the EDCA parameters of the primary AC are still adjusted to be less aggressive than that of the identified high priority STA. There is no requirement on how many low priority STAs should be. Even for single STA scenario (only priority STA) with UL and DL traffic, the channel access manager 512 may still help to improve latency as the high priority queue has more aggressive EDCA parameter and non-latency sensitive DL traffic would be mapped to the transmit queues with less aggressive EDCA parameter to help the UL traffic access the channel easily.

In some embodiments, a method for wireless communication at access point (AP) side to provide the STA the priority access and latency reduction involves mapping, based on STA priority and latency consideration, the downlink (DL) traffic of STAs to different transmit queues, and adjusting the EDCA parameters for the corresponding transmit queues at AP for channel access. In some embodiments, DL traffic to transmit queue mapping at AP further includes mapping the latency sensitive DL traffic of the first STA (priority STA) to a high priority transmit queue (special queue), and mapping the non-latency sensitive DL traffic of the first STA (if any) and the traffic of the second STAs (other lower priority STAs) to other transmit queues with ACs. In some embodiments, adjusting the EDCA parameter for transmit queues at AP further includes using more aggressive EDCA parameters and/or TID for the high priority transmit queue, and less aggressive EDCA parameters for the other transmit queues. In some embodiments, adjusting the EDCA parameter further includes using larger AIFSN and/or CWmin/CWmax for less aggressive setting, and using smaller AIFSN and/or CWmin/CWmax for more aggressive setting. Either adjusting one of them by fixing the other, or both. In some embodiments, the EDCA parameters between the other transmit queues could be the same or different based on their corresponding traffic requirement, but they would be less aggressive than the setting for the AC advertised for the first STA's UL traffic in EDCA parameter set element of beacon, probe response, and (re)association response. In some embodiments, QoS data in the high priority transmit queue (or special queue) could be sent in bursting sequence with Short Interframe Space (SIFS) interval, and the immediate retransmission packet could be sent within the TXOP in Priority Interframe Space (PIFS) interval with reasonable PHY rate adjustment in case of failure (CS mechanism indicates the medium is idle at PIFS slot boundary). In some embodiments, QoS data with bursting sequence in the high priority transmit queue could precede with RTS/CTS (single priority STA) or MU-RTS/CTS (multiple priority STAs) data exchange to reserve the TXOP especially in noisy environment from interference traffic. In some embodiments, the TXOP duration could be set to protect just single frame exchange sequence (which is less airtime efficient) or multiple frame exchange sequence with a reasonably longer duration (within TXOP limit) to make sure the QoS data in the queue can be transmitted with protection. The duration could also be set to be long enough to cover the UL traffic of the first STA to access the channel after the DL QoS data with protection from the interference traffic. In some embodiments, the QoS data is scheduled immediately to the high priority transmit queue upon availability to avoid any extra buffering latency, while the RTS/MU-RTS could be scheduled periodically for multiple frame exchange case.

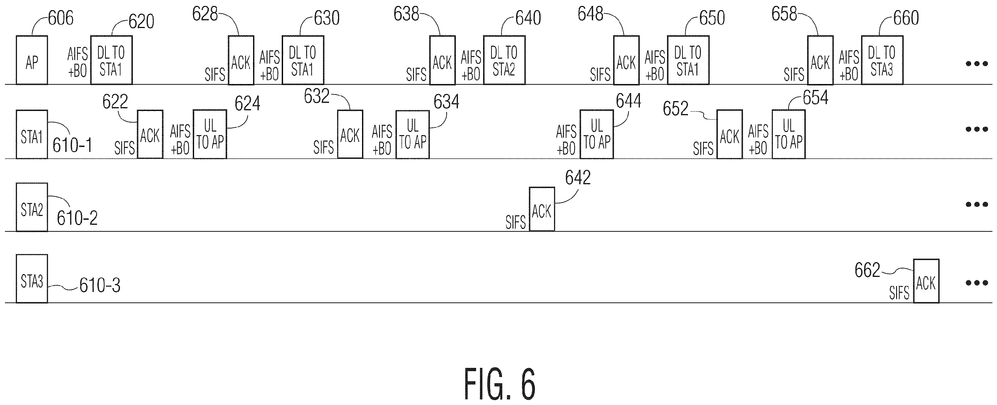

Fig. 6 illustrates some communications between an AP 606 and three stations (STAs) 610-1, 610-2, 610-3 in accordance with an embodiment of the invention. The station 610-1, which is also referred to as STA1, is the high priority STA and has both UL and DL traffic. The stations 610-2, 610-3, which are also referred to as STA2 and STA3, respectively, have DL traffic only, but the AC of data traffic is the same as all or part of STA1's UL and DL traffic. As the DL traffic to STA1 is assigned to a transmit queue with more aggressive EDCA parameters, the DL traffic can access the channel more easily than the DL traffic to other STAs whose EDCA parameters are adjusted to be less aggressive. The UL traffic from STA1 also becomes more easily to access the channel as the EDCA parameters of STA1 with the advertised AC is still more aggressive than the adjusted DL traffic to STA2 and STA3. As illustrated in Fig. 6, in a time sequence, the AP 606 transmits DL traffic 620 to STA1, STA1 transmits an ACK 622 and UL traffic 624 to the AP 606, the AP 606 transmits an ACK 628 and DL traffic 630 to STA1, STA1 transmits an ACK 632 and UL traffic 634 to the AP 606, the AP 606 transmits an ACK 638 to STA1 and DL traffic 640 to STA2, STA2 transmits an ACK 642 to the AP 606, STA1 transmits UL traffic 644 to the AP 606, the AP 606 transmits an ACK 648 and DL traffic 650 to STA1, STA1 transmits an ACK 652 and UL traffic 654 to the AP 606, the AP 606 transmits an ACK 658 to STA1 and DL traffic 660 to STA3, and STA3 transmits an ACK 662 to the AP 606. At least one of the ACKs can be a single ACK or a block ACK packet depends on the aggregation status. Each new packet transmission precedes with AIFS + backoff time (BO), where the BO counter will decrement when medium is idle and reset (BO procedure invoke) after packet transmission. The DL traffic to STA1 has priority to transmit latency sensitive traffic and STA1 has the priority to transmit for UL traffic.

In some embodiments, for the high priority STA, the QoS data in the high priority transmit queue (or special queue) is sent in bursting sequence with SIFS interval (effectively AIFSN=0, CWmin=0) instead of the regular AIFS+backoff procedure. In case of transmission failure (e.g., carrier sense (CS mechanism indicates the medium is idle at PIFS slot boundary), the immediate retransmission packet may be sent in PIFS interval with reasonable PHY rate adjustment. The number of the retry is programmable or up to MAC service data unit (MSDU) lifetime before being discarded.

In some embodiments, for the high priority STA, the QoS data with bursting sequence in the high priority transmit queue (or special queue) (e.g., the high priority queue 518 depicted in Fig. 5) is preceded with RTS/CTS or MU-RTS/CTS data exchange to reserve the TXOP especially in noisy environment. The TXOP duration may be set to protect a single frame exchange sequence (which is less airtime efficient) or multiple frame exchange sequences with a reasonably longer duration (within TXOP limit) to make sure the QoS data in the queue can be transmitted with protection. For longer duration case, if the priority STA has UL traffic, Contention Free-End (CF-END) frame transmission from AP is not necessary in case the TXOP is not used up as the STA can still use the remaining TXOP for UL channel access. In addition, the allocation of RTS/MU-RTS packet in the queue may be periodic, but the QoS data is queued as soon as it is available to avoid any extra buffering latency.

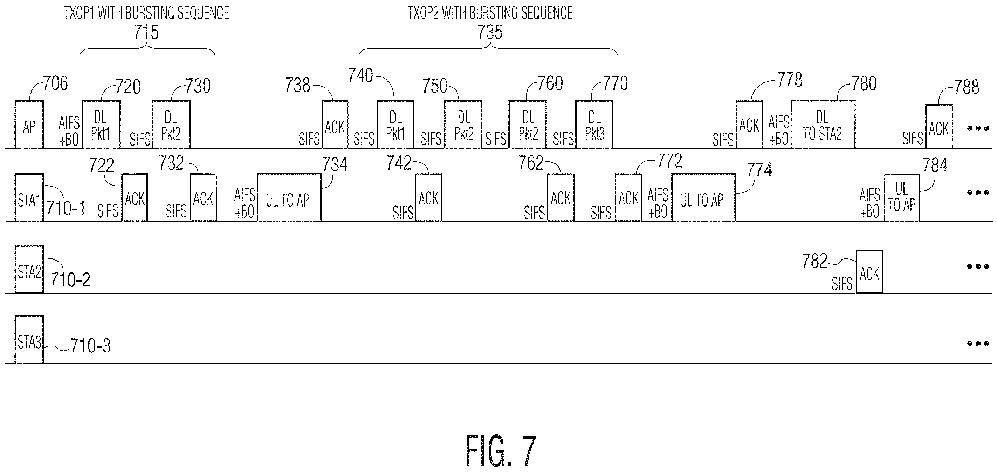

Fig. 7 illustrates some communications between an AP 706 and three stations (STAs) 710-1, 710-2, 710-3 in which DL traffic can be sent in bursting sequences in accordance with an embodiment of the invention. The station 710-1, which is also referred to as STA1, is the high priority STA and has both UL and DL traffic. The stations 710-2, 710-3, which are also referred to as STA2 and STA3, respectively, have DL traffic only, but the AC of data traffic is the same as all or part of STA1's UL and DL traffic. As the DL traffic to STA1 is assigned to a transmit queue with more aggressive EDCA parameters, the DL traffic can access the channel more easily than the DL traffic to other STAs whose EDCA parameters are adjusted to be less aggressive. The UL traffic from STA1 also becomes more easily to access the channel as the EDCA parameters of STA1 with the advertised AC is still more aggressive than the adjusted DL traffic to STA2 and STA3. The DL traffic to STA1 is sent in bursting sequences. In TXOP1 715, there are two DL packets 720, 730 sent to STA1 in bursting sequence with SIFS interval. In TXOP2 735, there are three DL packets 740, 750, 770 sent to STA1 in bursting sequence, where the packet 750 initially has no ACK and a retry packet 760 is sent with PIFS interval. The DL packets to STA1 from the special queue in each TXOP may be with the same or different TIDs. As illustrated in Fig. 7, in a time sequence, the AP 706 transmits two DL packets 720, 730 in bursting sequence with SIFS interval to STA1 in TXOP1 715, STA1 transmits ACKs 722, 732 and UL traffic 734 to the AP 706, the AP 706 transmits an ACK 738 and three DL packets 740, 750, 770 to STA1 in bursting sequence in TXOP2 735, where the packet 750 initially has no ACK and a retry packet 760 is sent with PIFS interval, STA1 transmits ACKs 742, 762, 772 and UL traffic 674 to the AP 706, the AP 706 transmits an ACK 778 to STA1 and DL traffic 780 to STA2, STA2 transmits an ACK 782 to the AP 706, STA1 transmits UL traffic 784 to the AP 706, and the AP 706 transmits an ACK 788 to STA1. At least one of the ACKs can be a single ACK or a block ACK packet depends on the aggregation status. Each new packet transmission precedes with AIFS + backoff time (BO), where the BO counter will decrement when medium is idle and reset (BO procedure invoke) after packet transmission.

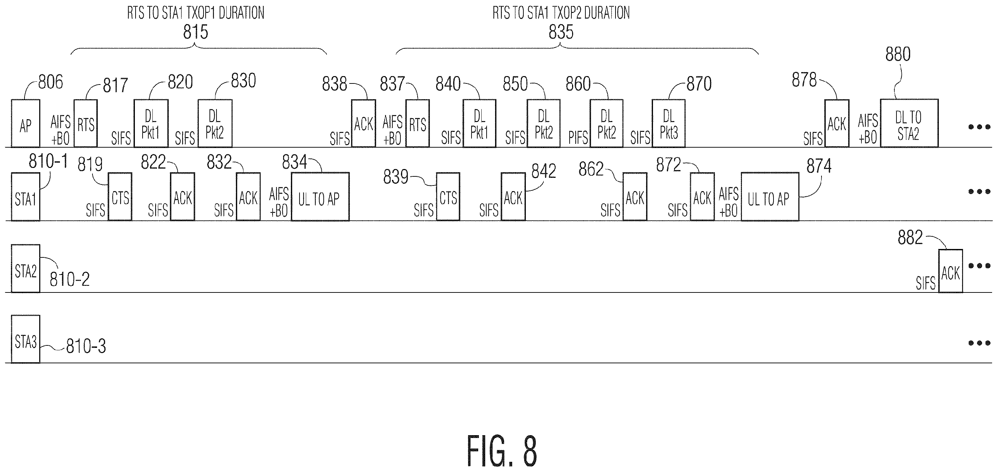

Fig. 8 illustrates some communications between an AP 806 and three stations (STAs) 810-1, 810-2, 810-3 in which DL traffic can be sent in bursting sequences preceded with RTS/CTS packet exchanges in accordance with an embodiment of the invention. The station 810-1, which is also referred to as STA1, is the high priority STA and has both UL and DL traffic. The stations 810-2, 810-3, which are also referred to as STA2 and STA3, respectively, have DL traffic only, but the AC of data traffic is the same as all or part of STA1's UL and DL traffic. As the DL traffic to STA1 is assigned to a transmit queue with more aggressive EDCA parameters, the DL traffic can access the channel more easily than the DL traffic to other STAs whose EDCA parameters are adjusted to be less aggressive. The UL traffic from STA1 also becomes more easily to access the channel as the EDCA parameters of STA1 with the advertised AC is still more aggressive than the adjusted DL traffic to STA2 and STA3. Compared to Fig. 7, the DL traffic to STA1 in bursting sequence is preceded with RTS/CTS packet exchange to reserve a long TXOP (via Duration at RTS) especially in noisy environment. In TXOP1 815, there are two DL packets 820, 830 sent to STA1 with SIFS interval, and a STA1 UL packet 834 also gets channel access within the TXOP1 815 while the interference packets cannot access due to the network allocation vector (NAV), which is an indicator, maintained by each station (STA), of time periods when transmission onto the wireless medium (WM) is not initiated by the STA regardless of whether the STA's clear channel assessment (CCA) function senses that the WM is busy. In TXOP2 835, there are three DL packets 840, 850, 870 sent to STA1 in bursting sequence, where the packet 850 initially has no ACK and a retry packet 860 is sent with PIFS interval. Similarly, a STA1 UL packet 874 gets the channel access and sent out within the TXOP2 835. The DL packets to STA1 from the special queue in each TXOP may be with the same or different TIDs. As illustrated in Fig. 8, in a time sequence, after RTS 817/CTS 819 exchange between the AP 806 and STA1, the AP 806 transmits two DL packets 820, 830 in bursting sequence with SIFS interval to STA1 in TXOP1 815, STA1 transmits ACKs 822, 832 and UL traffic 834 to the AP 806, the AP 806 transmits an ACK 838 to STA1, after RTS 817/CTS 819 exchange between the AP 806 and STA1, the AP 806 transmits three DL packets 840, 850, 870 to STA1 in bursting sequence in TXOP2 835, where the packet 850 initially has no ACK and a retry packet 860 is sent with PIFS interval, STA1 transmits ACKs 842, 862, 872 and UL traffic 874 to the AP 806, the AP 806 transmits an ACK 878 to STA1 and DL traffic 880 to STA2, and STA2 transmits an ACK 882 to the AP 806. At least one of the ACKs can be a single ACK or a block ACK packet depends on the aggregation status. Each new packet transmission precedes with AIFS + backoff time (BO), where the BO counter will decrement when medium is idle and reset (BO procedure invoke) after packet transmission.

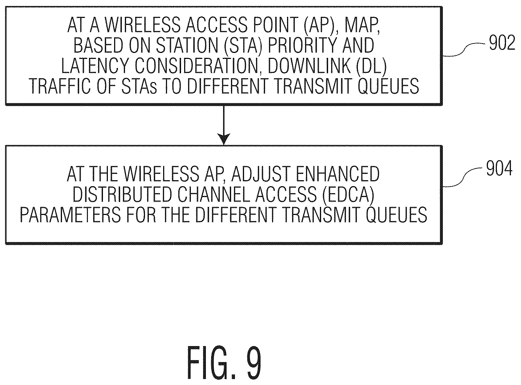

Fig. 9 is a process flow diagram of a method for wireless communications in accordance with an embodiment of the invention. At block 902, at a wireless access point (AP), based on station (STA) priority and latency consideration, downlink (DL) traffic of STAs is mapped to different transmit queues. At block 904, at the wireless AP, Enhanced Distributed Channel Access (EDCA) parameters are adjusted for the different transmit queues. In some embodiments, at the wireless AP, wireless channel access is implemented based on the adjusted EDCA parameters to communicate with the STAs. The wireless AP may be the same as or similar to an embodiment of the AP 106 depicted in Fig. 1, the APs 206-1, 206-2 depicted in Fig. 2, the wireless device 300 depicted in Fig. 3, the AP 606 depicted in Fig. 6, the AP 706 depicted in Fig. 7, and/or the AP 806 depicted in Fig. 8. At least one of the STAs may be the same as or similar to an embodiment of the STA 110-1, ..., 110-n depicted in Fig. 1, the STAs 210-1, 210-2 depicted in Fig. 2, the wireless device 300 depicted in Fig. 3, the STAs 610-1, 610-2, 610-3 depicted in Fig. 6, the STAs 710-1, 710-2, 710-3 depicted in Fig. 7, and/or the STAs 810-1, 810-2, 810-3 depicted in Fig. 8.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A wireless device comprising:
a controller configured o map, based on station, STA, priority and latency consideration, downlink, DL, traffic of a plurality of STAs to a plurality of different transmit queues and to adjust a plurality of Enhanced Distributed Channel Access, EDCA, parameters for the different transmit queues; and
a wireless transceiver configured to implement wireless channel access based on the adjusted EDCA parameters to communicate with the STAs.

2. The wireless device of claim 1, wherein the wireless device comprises a wireless access point, AP.

3. The wireless device of claim 1, wherein the controller is further configured to:
map latency sensitive DL traffic to be transmitted to a first STA of the STAs to a high priority transmit queue of the different transmit queues; and
map DL traffic to be transmitted to other STAs of the STAs to other transmit queues of the different transmit queues.

4. The wireless device of claim 3, wherein the controller is further configured to:
map non-latency sensitive DL traffic to be transmitted to the first STA to the other transmit queues of the different transmit queues.

5. The wireless device of claim 3 or 4, wherein the wireless transceiver is further configured to transmit Quality of Service, QoS, data in the high priority transmit queue in a bursting sequence.

6. The wireless device of claim 5, wherein the bursting sequence in the high priority transmit queue is preceded with a request to send, RTS, and a clear to send, CTS, exchange to reserve a transmit opportunity, TXOP.

7. The wireless device of claim 6, wherein the controller is further configured to set a duration of the TXOP to protect the QoS data in the high priority transmit queue.

8. The wireless device of any of claims 3 to 7, wherein the controller is further configured to:
use a first set of EDCA parameters for the high priority transmit queue; and
use a second set of EDCA parameters for the other transmit queues, wherein the second set of EDCA parameters are less aggressive than the first set of EDCA parameters.

9. The wireless device of claim 8, wherein the controller is further configured to:
use larger arbitration interframe spacing, AIFS, number, AIFSN, or minimum contention window, CWmin, for the second set of EDCA parameters; and
use smaller AIFSN or CWmin for the first set of EDCA parameters.

10. The wireless device of claim 8, wherein the controller is further configured to:
use larger arbitration interframe spacing, AIFS, number, AIFSN, or maximum contention window, CWmax, for the second set EDCA parameters; and
use smaller AIFSN or CWmax for the first set of EDCA parameters.

11. The wireless device of any of claims 8 to 10, wherein the controller is further configured to set the second set of EDCA parameters for the other transmit queues to be less aggressive than a setting for an Access Category, AC, advertised for the first STA's uplink, UL, traffic.

12. The wireless device of any preceding claim, wherein the wireless device comprises a wireless multi-link device, MLD.

13. The wireless device of any preceding claim, wherein the wireless device is compatible with an Institute of Electrical and Electronics Engineers, IEEE, 802.11 protocol.

14. A method for wireless communications, the method comprising:
at a wireless access point, AP, mapping, based on station, STA, priority and latency consideration, downlink, DL, traffic of a plurality of STAs to a plurality of different transmit queues; and
at the wireless AP, adjusting a plurality of Enhanced Distributed Channel Access, EDCA, parameters for the different transmit queues.

15. The method of claim 14, further comprising at the wireless AP, implementing wireless channel access based on the adjusted EDCA parameters to communicate with the STAs.
